# EUROPÄISCHE PATENTSCHRIFT

(11) **EP 2 340 595 B1**
(45) Veröffentlichungstag und Bekanntmachung des Hinweises auf die Patenterteilung: **08.08.2012**
(21) Anmeldenummer: 08874990.8
(22) Anmeldetag: 20.10.2008
(51) Int. Cl.: H02J 3/18, H01F 27/42

(54) **VORRICHTUNG UND VERFAHREN ZUR BLINDLEISTUNGSKOMPENSATION EINES PRÜFTRANSFORMATORS**
APPARATUS AND METHOD FOR REACTIVE POWER COMPENSATION OF A TEST TRANSFORMER
DISPOSITIF ET PROCÉDÉ POUR LA COMPENSATION DE LA PUISSANCE RÉACTIVE D'UN TRANSFORMATEUR D'ESSAI

(43) Veröffentlichungstag der Anmeldung: 06.07.2011
(73) Patentinhaber: Siemens Aktiengesellschaft, 80333 München (DE)
(72) Erfinder: MOCKENHAUPT, Jan-Rainer, 90768 Fuerth-Burgfarrnbach (DE)
(86) Internationale Anmeldenummer: PCT/EP2008/008986
(87) Internationale Veröffentlichungsnummer: WO 2010/045959

(56) Entgegenhaltungen:
- WO-A-96/24188
- WO-A-2007/111541
- DE-A1- 3 622 570

## Beschreibung

Die Erfindung betrifft eine Vorrichtung und ein Verfahren zur Blindleistungskompensation eines Prüftransformators mit einer Drossel und einem Generator, wobei der Generator zur Erzeugung eines Generatorstromes und einer Generatorspannung mit vorgebbarer Prüffrequenz dient.

Leistungstransformatoren werden aufgrund der jeweils geforderten Leistungsspezifikationen von Stromversorgern und Leitungsnetzbetreibern für jeden Einzelfall entwickelt und hergestellt. Im Rahmen des Entwicklungs- und Herstellungsprozesses haben die Leistungstransformatoren spezifische Leistungsanforderungen zu erfüllen, die mittels so genannter Prüfeinrichtungen überprüft und nachgewiesen werden. Am Ende des Herstellungsprozesses wird der Leistungstransformator als Prüftransformator in einer stationären Prüfeinrichtung bezüglich seiner Leistungsmerkmale überprüft. Hierbei wird zum Beispiel die Spannungsfestigkeit mittels Durchführung einer induzierten Stehwechselspannungsprüfung, getestet.

Aufgrund von nationalen und internationalen Vorschriften beziehungsweise Normen muss die Prüfeinrichtung den Prüftransformator in einem großen elektrischen Leistungsbereich überprüfen können. Daher werden die Prüfeinrichtungen so konzipiert, dass der noch größtmöglich zu testende Prüftransformator innerhalb der Prüfeinrichtung getestet werden kann.

Neben den baulichen Anforderungen an eine Prüfeinrichtung müssen durch die Prüfeinrichtung auch bestimmte elektrische Leistungsbereiche, für die Prüfung des Prüftransformators bei unterschiedlichen Prüffrequenzen und unterschiedlichen Prüfspannungen, bereitgestellt werden. Die Wahl der Prüffrequenzen und Prüfspannungen hat dabei den internationalen und nationalen Normen zu folgen. Prüffrequenz und Prüfspannung beeinflussen den gesamten Prüfkreis und die Auslegung der Komponenten. Bei einer Prüfspannung mit einer niedrigen Frequenz ist das elektrische Verhalten des Prüftransformators stark induktiv. Hingegen ist bei einer hohen Frequenz der Prüfspannung das Verhalten des Prüftransformators im Prüfkreis stark kapazitiv. Problematisch ist dabei, dass im Falle eines Ungleichverhältnisses von bestimmten Komponenten des Prüfkreises mit Prüftransformator, beispielsweise der Masse von aktivem Eisen der Transformatorkerne und des Generators relativ zur Masse des Kupfers des elektrischen Kreises, sehr hohe kapazitive beziehungsweise induktive Störanteile im Rahmen der Prüfung auftreten können beziehungsweise bei einem zu großen Ungleichverhältnis von bestimmten Komponenten des Prüftransformators sogar eine Prüfung verhindern können.

Traditionell begegnet man diesem Problem damit, dass sehr große Motor/Generatormaschinensätze zur Erzeugung der notwendigen Generatorspannung beziehungsweise des Generatorstromes mit vorgebbarer Prüffrequenz verwendet werden. Für den notwendigen Leistungsbereich sind diese Motor/-Generatormaschinensätze zur Aufbringung der benötigten Wirk- und Blindleistung sehr groß und können daher nicht mobil eingesetzt werden.

Des Weiteren sind fest installierte Prüfeinrichtungen mit mittelgroßen Transformatoren und großen nur im spannungslosen Zustand schaltbaren Drosseln und Kondensatoren bekannt. Das Zu- beziehungsweise Wegschalten der Blindleistungskompensation erfolgt in diesem Fall jedoch ungeregelt und erfordert vor jeder Änderung der Schaltstufe ein Herunterfahren des Motor/Generatormaschinensatzes beziehungsweise das elektrische Freischalten der Kompensationseinrichtung. Diese Methode ist zeitaufwändig und belastet den Motor- beziehungsweise den Generatormaschinensatz mechanisch, elektrisch und thermisch.

Insbesondere vor dem Hintergrund der Forderungen von Energieversorgungsunternehmen und staatlichen Aufsichtstellen nach einer "vor Ort" -Prüfung der im Betrieb befindlichen Leistungstransformatoren können die bisherigen großen Motor/- Generatormaschinensätze nicht verwendet werden. Alternativ wäre eine Einzelfallberechnung der Induktivität und Kapazität des Prüftransformators im jeweiligen gesamten Prüfkreis möglich, und danach die Bereitstellung der passenden Kapazitäten, bzw. Induktivitäten. Dies müsste für jeden Prüfungsfall unter definierten Prüfspannungen und Prüffrequenzen individuell erfolgen. Dieses Verfahren ist sehr aufwändig und kann nicht auf Prüftransformatoren angewendet werden, von denen die im Herstellungsverfahren spezifisch ermittelten Leistungsdaten nicht vorliegen.

So beschreibt die DE 40 07 826 C2 ein Verfahren zum Betrieb eines Blindleistungsreglers, der mittels eines Stromwandlers in einem zu kompensierenden Netz in Abhängigkeit von ermittelten Kapazitätswerten innerhalb des zu kompensierenden Netzes Kondensatorstufen einer gestuften Kondensatorbatterie zubeziehungsweise abschaltet.

Des Weiteren beschreibt die DE 101 37 615 A1 ein Verfahren zur Blindleistungskompensation, bei dem über ein Blindenergiedifferenzregler die Blindenergie anhand der aktuellen Netzspannung und der Netzströme der zu kompensierenden Anlage erfasst und in Abhängigkeit einer gegebenenfalls ermittelten Unter- beziehungsweise Überkompensation der Blindarbeit ein mittlerer Blindleistungsbedarf ermittelt und zur Kompensation bereitgestellt wird.

Ebenfalls beschreibt die DE 36 22 570 A1 ein Stellaggregat für Wechselspannungsprüfanlagen, bestehend aus einem Stelltransformator und einer Kompensationsdrosselspule. Mittels einer zusätzlichen kapazitiven Prüfanlage wird durch geeignete Dimensionierung des Stelltransformators und der Drossel mittels des Stellaggregats eine Spannungsprüfung im gesamten Spannungsbereich des Prüftransformators ermöglicht.

Weiterhin beschreibt die WO 2007/111541 A1 beschreibt eine Vorrichtung zur Blindleistungskompensation für eine Stromübertragungsleitung mit einer Drossel, wobei die Induktivität der Drossel einstellbar ist und mit einer gestuften Kondensatorbatterie verschaltbar ist. Die einstellbare Drossel und die gestufte Kondensatorbatterie sind dabei zwischen dem ersten und dem zweiten Netzknoten angeordnet.

Des Weiteren beschreibt die US 5,281,908 eine mobile Prüfeinrichtung mit veränderbaren Kapazitäten, wobei die Kapazitäten durch die Prüfeinrichtung in Abhängigkeit der Messwerte des Prüfkreises beziehungsweise Prüftransformators inkrementell verändert werden können.

Problematisch bei allen Lösungen im Stand der Technik ist, dass eine unmittelbare "vor Ort"-Prüfung des Leistungstransformators in einem großen Spannungs- und Frequenzbereich mit den bekannten Anlagen derzeit nicht möglich ist.

Es ist daher Aufgabe der vorliegenden Erfindung, eine Vorrichtung und ein Verfahren zur Blindleistungskompensation eines Prüftransformators bereitzustellen, wobei die Vorrichtung einfach und in unmittelbarer Nähe eines Leistungstransformators als Prüftransformator aufstellbar und eine "vor Ort"-Prüfung schnell und einfach durchführbar ist.

Die Aufgabe wird hinsichtlich der Vorrichtung zur Blindleistungskompensation eines Prüftransformators gemäß den Merkmalen des Patentanspruchs 1 gelöst.

Die Aufgabe wird ebenfalls hinsichtlich des Verfahrens der Blindleistungskompensation eines Prüftransformators gemäß dem Anspruch 6 gelöst.

Erfindungsgemäß ist vorgesehen, dass die Induktivität der Drossel einstellbar und mit einer gestuften Kondensatorbatterie verschaltbar ist, wobei die Drossel und die gestufte Kondensatorbatterie zwischen dem Generator und dem Prüftransformator angeordnet und aufgrund von ermittelten elektrischen Größen eines Prüfkreises mit dem Prüftransformator so schaltbar sind, dass der Generator bei nahezu ausschließlicher Wirkleistung betreibbar ist. Dadurch, dass der Generator fast ausschließlich mit Wirkleistung betrieben werden kann, ist ein optimaler Arbeitspunkt für eine Prüfung des Prüftransformators innerhalb des Prüfkreises gewährleistet. Hierdurch kann die Leistung des Generators zur Erzeugung einer Generatorspannung beziehungsweise eines Generatorstromes mit vorgebbarer Prüffrequenz, der Drossel und der gestuften Kondensatorbatterie klein gehalten werden und ermöglicht durch die so vorgenommene Reduzierung von Bauteilgrößen den Einsatz der Vorrichtung unmittelbar vor Ort des zu prüfenden Leistungstransformators.

Vorteilhafterweise ist die Drossel derart ausgestaltet, dass mittels des Tauchkernprinzips der Kern innerhalb der Wicklung stufenlos einstellbar ist und hierdurch die Induktivität stufenlos eingestellt werden kann. Die gestufte Kondensatorbatterie erlaubt ein Zu- beziehungsweise Wegschalten der jeweiligen Kondensatorstufen auch unter Last, so dass eine Unterbrechung des Prüfbetriebs zur Änderung von kapazitiven Kompensationsstufen - wie im Stand der Technik notwendig - nicht vorgenommen werden muss.

Vorteilhafterweise wird ein Phasenwinkel cos(Φ) zwischen der Generatorspannung und dem Generatorstrom ermittelt und hieraus die Einstellgrößen für die gestufte Kondensatorbatterie und/oder die einstellbare Drossel ermittelt und eingestellt. Der Phasenwinkel cos(Φ), der zwischen der Generatorspannung und dem Generatorstrom anliegt, ist das Maß für den Grad der Blindarbeit innerhalb des Prüfkreises. Mit der Ermittlung des entsprechenden Phasenwinkels cos(Φ) zwischen der Generatorspannung und dem Generatorstrom und einer entsprechenden Kompensation dieses Phasenwinkels durch die gestufte Kondensatorbatterie und die einstellbare Drossel kann der Generator bei fast ausschließlicher Wirkleistung betrieben werden. Im Falle der Verwendung eines Anpassungstransformators zur Transformation der Generatorspannung und des Generatorstromes auf die Prüfspannung und den Prüfungsstrom für den Prüftransformator kann alternativ beziehungsweise zusätzlich der Phasenwinkel cos(Φ) zwischen der Prüfspannung und dem Prüfstrom unmittelbar vor dem Prüftransformator - unter Berücksichtigung des gesamten Prüfkreises - ermittelt und zur Ermittlung der notwendigen Blindleistungskompensation im Prüfkreis genutzt werden.

Eine Steuerung ermittelt vorteilhafterweise die Einstellgrößen der gestuften Kondensatorbatterie und/oder der einstellbaren Drossel in Abhängigkeit des Phasenwinkels cos(Φ) zwischen Generatorspannung/Generatorstrom und/oder Prüfspannung/Prüfstrom unmittelbar vor dem Prüftransformator mit vorgebbarer Prüffrequenz und stellt die hieraus ermittelten Einstellgrößen an der gestuften Kondensatorbatterie und/oder der einstellbaren Drossel ein.

Der zum Antrieb des Generators notwendige Motor wird vorteilhafterweise auf die geforderte Drehzahl als äquivalent zur Prüffrequenz eingestellt. Mittels eines Leistungsschalters wird bei anstehender Drehzahl der Anpassungstransformator als Teil des Prüfkreises verbunden. Der Anpassungstransformator dient zur Übersetzung der durch den Generator erzeugten Generatorspannung/Generatorstrom auf die am Prüftransformator notwendig anzulegende Prüfspannung/Prüfstrom. Bei dem Anliegen der geforderten Drehzahl des Motors wird durch Schließung des Leistungsschalters am Eingang des Anpassungstransformators gleichzeitig die Generatorerregung zugeschaltet und langsam hochgefahren. Im Rahmen dieses Hochfahrprozesses des Generators werden kontinuierlich die Generatorspannung und der Generatorstrom beziehungsweise der zwischen Generatorspannung und Generatorstrom anliegende Phasenwinkel ermittelt und hieraus Einstellgrößen für die einstellbare Drossel und die gestufte Kondensatorbatterie abgeleitet. Zusätzlich kann der Phasenwinkel zwischen der Prüfspannung und dem Prüfstrom unmittelbar vor dem Prüftransformator ermittelt werden. Vorteilhafterweise ist bei geschlossenem Leistungsschalter der Motor regelbar und auf die geforderte Drehzahl als äquivalent zur Prüffrequenz einstellbar.

Erfindungsgemäß ist ein Verfahren zur Blindleistungskompensation eines Prüftransformators mit einer Drossel und einer Kondensatorbatterie und einem Generator derart vorgesehen, dass die notwendige Drehzahl des Motors als äquivalent zur Prüffrequenz ermittelt und hierauf ein entsprechender Generator zuschaltbar ist.

Der sich im angeschlossenen Prüfkreis ergebende Phasenwinkel cos(Φ) zwischen der Generatorspannung und dem Generatorstrom wird ermittelt und basierend auf entsprechenden Messgrößen des Prüfkreises wird die Induktivität der einstellbaren Drossel und/oder die Kapazität der gestuften Kondensatorbatterie so eingestellt, dass der Generator bei geschlossenem Prüfkreis bei nahezu ausschließlicher Wirkleistung betrieben wird.

Vorteilhafterweise ist bei einer kapazitiven Kompensation des Prüftransformators im Prüfkreis vorgesehen, dass bis zu einem Grenzwert des Phasenwinkels cos(Φ) zwischen dem Generatorstrom und der Generatorspannung und/oder zwischen einer unmittelbar vor dem Prüftransformator ermittelten Prüfspannung und einem Prüfstrom keine Kapazität zugeschaltet wird. Erst mit dem Erreichen des vorgebbaren Grenzwertes des cos(Φ) werden Kondensatorstufen der gestuften Kondensatorbatterie im Zuge der Erhöhung der Generatorspannung schrittweise zugeschaltet, bis die vorgegebene Generator- beziehungsweise Prüfspannung erreicht ist.

Vorteilhafterweise wird bei einem Verlustfaktor von cos(Φ)=0,7 die kapazitive Kompensation zugeschaltet. Die Anzahl der Stufen der Kondensatorbatterie werden nicht starr vorgegeben, sondern ergeben sich aus dem Verlauf des Verlustfaktors nach dem Zuschalten der ersten beziehungsweise jeder weiteren Stufe. Hierbei wird der jeweilige Verlustfaktor als Phasenwinkel cos(Φ) vor und nach der Zuschaltung einer Kondensatorstufe ermittelt und abgeschätzt, ob weitere Kondensatorstufen zugeschaltet werden müssen. Bei Erreichen eines Verlustfaktors als Phasenwinkel cos(Φ)≈1 beziehungsweise eines kapazitiven Verlustfaktors von cos(Φ)≈0,9 werden keine weiteren Kondensatorstufen zugeschaltet, sondern die Generatorerregung wird weiter hochgefahren. Der gesamte Vorgang wiederholt sich daher so lange, bis die Generatorspannung beziehungsweise bei Verwendung eines Anpassungstransformators die Prüfspannung am Prüftransformator anliegt. Sollte nach der Zuschaltung der maximalen kapazitiven Kompensationsleistung die Generator- beziehungsweise Prüfspannung immer noch nicht erreicht sein, kann das System die Erregung weiter erhöhen, jedoch bis zur maximalen Stabilitätsgrenze von einem Phasenwinkel cos(Φ)≈0,6.

Eine induktive Kompensation wird vorteilhafterweise durch Einstellung der einstellbaren Drossel und der Abschaltung der gestuften Kondensatorbatterie vorgenommen. Da bei kapazitivem Verhalten des Prüfkreises - vorwiegend bei Frequenzen oberhalb von 80 Hz - die kapazitive Kompensation nicht notwendig ist, wird sie vollständig vom Prüfkreis genommen. Im Gegensatz zu einer kapazitiven Kompensation ist die induktive Kompensation mittels einer einstellbaren Drossel, insbesondere nach dem Tauchkernprinzip, stufenlos regelbar.

In sofern werden nach der Zuschaltung der Erregung des Generators der Verlustfaktor als Phasenwinkel cos(Φ) kontinuierlich errechnet und ein Soll-Ist-Vergleich des augenblicklichen und vorgegebenen Phasenwinkels cos (Φ) ermittelt. Im Rahmen des Regelvorgangs wird die einstellbare Drossel der Gestalt gesteuert, dass in Abhängigkeit des Phasenwinkels cos(Φ) die Induktivität bezüglich der ermittelten Blindleistung nachgeführt wird. Dies erfolgt solange, bis die Generator- beziehungsweise Prüfspannung erreicht ist beziehungsweise die maximal zuschaltbare Induktivität dem Prüfkreis ansteht. Die Erhöhung der Generatorspannung erfolgt mit einer Geschwindigkeit, die an die Nachführung des Tauchkernes angepasst ist. So wird eine kontinuierliche Regelung der induktiven Kompensation der Blindleistung erreicht. Sollte die Generator- beziehungsweise Prüfspannung nach Zuschaltung der maximalen Induktivität noch nicht anliegen, kann die Erregung weiter hochgefahren werden, jedoch bis maximal zu einem Phasenwinkel von cos(Φ)≈0,6. Dieser Wert soll als Stabilitätslimit der Anlage nicht unterschritten werden.

Vorteilhafterweise werden im Rahmen des Verfahrens die Einstellgrößen der einstellbaren Drossel und/oder der gestuften Kondensatorbatterie aus dem ermittelten Phasenwinkel zwischen Generatorspannung/Generatorstrom beziehungsweise zwischen Prüfspannung/Prüfstrom mittels einer speicherprogrammierbaren Steuerung ermittelt beziehungsweise durch die speicherprogrammierbare Steuerung gesteuert. Zur besseren Ermittlung der im Prüfkreis vorherrschenden elektrischen Zustände sind im Prüfkreis Messwandler insbesondere zur Ermittelung des Phasenwinkels cos(Φ) zwischen der Generatorspannung und des Generatorstromes und/oder zur Ermittelung des Phasenwinkels cos(Φ) zwischen der Prüfspannung und des Prüfstromes angeordnet.

Weitere vorteilhafte Ausgestaltungen finden sich in den Unteransprüchen. Es zeigen die Figuren
- Fig. 1: ein Schaltbild des Prüfkreises mit drei gestuften Kondensatorbatterien und einer einstellbaren Drossel;
- Fig. 2: ein Schaltbild eines Kompensationskreises bestehend aus zwei gestuften Kondensatorbatterien und drei einstellbaren Drosseln;
- Fig. 3: ein Schaltbild des Prüfkreises mit Messwandlern und einer Auswerteeinheit.

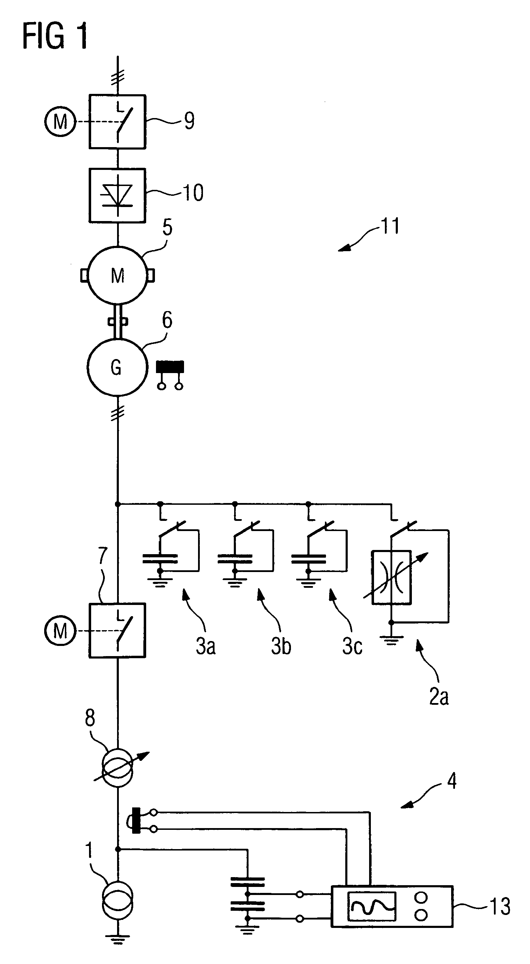

Die Figur 1 zeigt ein generelles Schaltbild der vorteilhaften Vorrichtung. Mittels eines Hauptschalters 9 ist der Prüfkreis an eine äußere Spannungsquelle, insbesondere eine 400V, 1500A Wechselspannungsquelle, angeschlossen. Mittels eines Strombeziehungsweise Frequenzrichters 10 wird die dreiphasige Wechselspannung auf eine Gleichspannung für den Motor 5 umgewandelt. Der Motor dient zum Antrieb des Generators 6, der die entsprechende Generatorspannung mit vorgebbarer Prüffrequenz unmittelbar erzeugt, beziehungsweise falls die entsprechende Generatorspannung nicht ausreicht, diese mittels eines Anpassungstransformators 8 auf die Prüfspannung transformiert wird. Die einstellbare Drossel 2a ist im gezeigten Beispiel der Fig. 1 mit drei Kondensatorstufen 3a, 3b, 3c innerhalb des Prüfkreises 11 verbunden. Mittels eines Leistungsschalters 7 kann bei anstehender Drehzahl des Generators 6 und damit als äquivalent zur auf Prüffrequenz erregten Generatorspannung der Schalter 7 geschlossen und damit der Prüfkreis 11 ebenfalls geschlossen werden. Über einen speziellen Messkreis 4 kann dann der am Prüftransformator 1 anliegende Phasenwinkel cos(Φ) zwischen der Prüfspannung und dem Prüfstrom gemessen und mittels einer Auswerteeinrichtung 13 visualisiert werden.

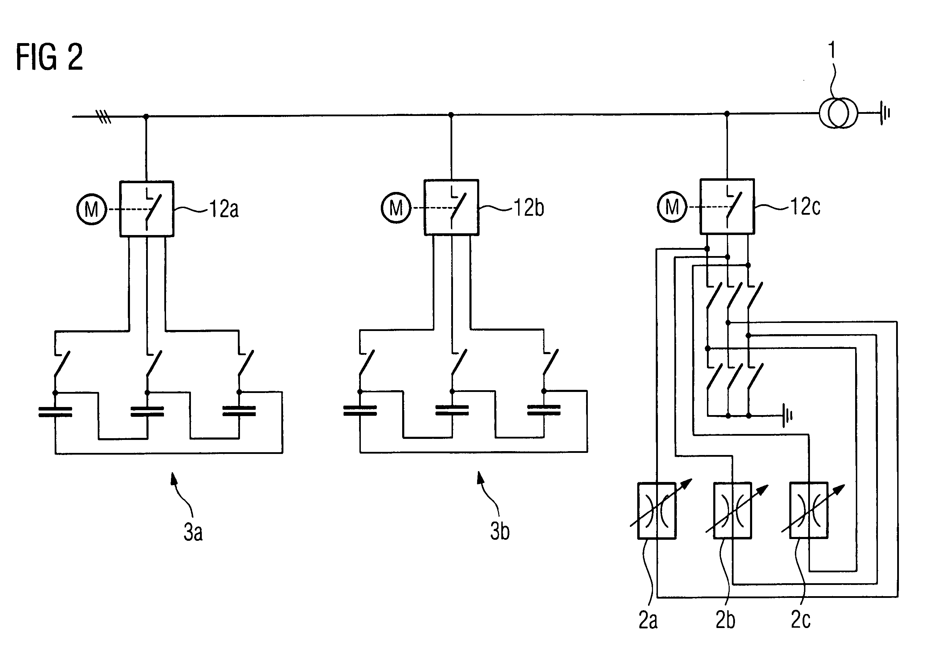

Die Fig. 2 zeigt ein Schaltbild des Kompensatorkreises mit drei einstellbaren Drosseln 2a, 2b, 2c und zwei gestuften Kondensatorbatterien 3a, 3b. In Abhängigkeit des Phasenwinkels cos(Φ) zwischen der Generatorspannung und dem Generatorstrom beziehungsweise zwischen der Prüfspannung und dem Prüfstrom kann eine notwendige kapazitive beziehungsweise induktive Kompensation einfach und während des laufenden Prüfbetriebes bereitgestellt werden. Dabei ist eine induktive Kompensation mittels der einstellbaren Drosseln 2a, 2b, 2c, insbesondere durch Drosseln nach dem Tauchkernprinzip gewährleistet. In Abhängigkeit der Größe der Kapazität der einzelnen Kondensatorstufen der gestuften Kondensatorbatterie 3a,3b kann auch mittels der gestuften Kondensatorbatterie 3a,3b eine kapazitive Kompensation in inkrementell kleinen Abständen bereitgestellt werden.

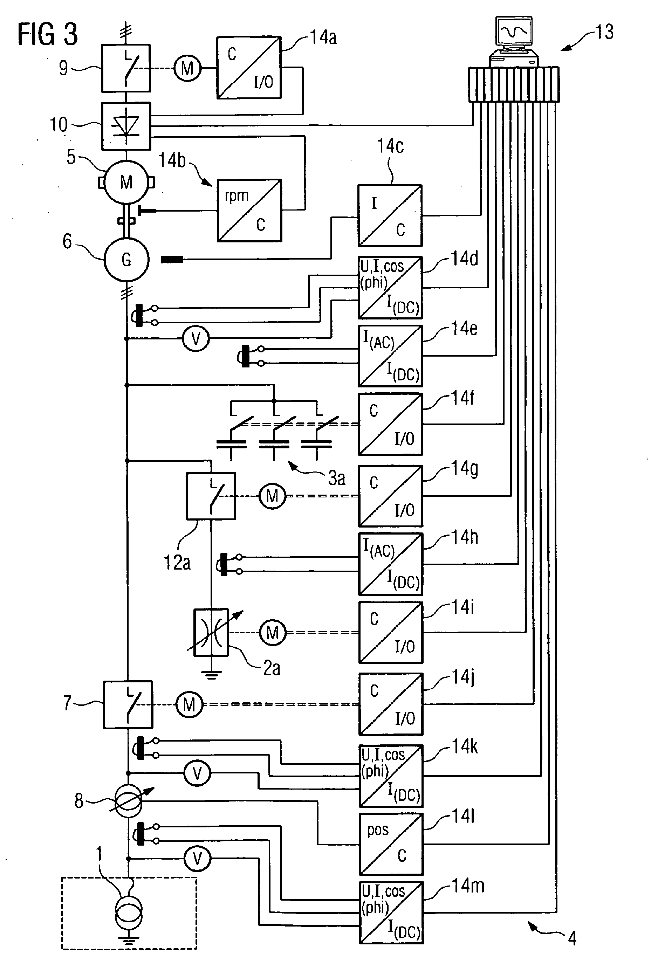

Die Fig. 3 zeigt ein exemplarisches Schaltbild mit an verschiedenen Stellen des Prüfkreises 11 angeordneten Messaufnehmern und anschließenden Messumformern 14a bis 14m. Insbesondere vor dem Prüftransformator 1 wird ein Messwandler 14m zur Ermittlung des Phasenwinkels zwischen der Prüfspannung und des Prüfstromes.sowie vor dem Anpassungstransformator 8 ein Messwandler 14k zur Ermittlung der Generatorspannung und des Generatorstromes angeordnet. Des Weiteren ist unmittelbar nach dem Generator 6 ein Messaufnehmer mit entsprechendem Messwandler 14b geschaltet, der den Phasenwinkel cos(Φ) zwischen der Generatorspannung und dem Generatorstrom in unmittelbarer Nähe des erzeugenden Generators 6 ermittelt. Die erhaltenen Messwerte der Messumformer 14a bis 14m werden zu einer Auswerteeinrichtung 13 übermittelt und mittels einer Steuerung (nicht dargestellt) zur Einstellung der Einstellwerte der jeweiligen Komponenten des Prüfkreises 11 verwendet.

Die Einbindung von regelbaren Drosseln 2a,2b,2c und gestuften Kondensatorbatterien 3a,3b,3c unter Verwendung einer automatisierten Steuerung ermöglicht den Betrieb des Generators 6 des Prüfkreises 11 nahe am Wirkungsleistungsarbeitspunkt des Generators 6 (Phasenwinkel cos(Φ)≈1). Durch Optimierung der Kompensation mittels automatischer Regelung muss der Generator 6 kaum Blindleistung aufbringen. Dadurch kann die Leistung und notwendige Baugröße des entsprechenden Generators 6 an die tatsächlich benötigte Wirkleistung und nicht mehr an dem Blindleistungsbedarf des gesamten Prüfkreises 11 angepasst werden. Mittels der automatisierten Kompensation der Blindleistung ergibt sich die Möglichkeit von kleinen Generatoren beziehungsweise Motor/Generatormaschinensätzen im Vergleich zu bisherigen Anlagen.

Ein weiterer Vorteil der automatischen Blindleistungskompensation gemäß der vorliegenden Erfindung liegt in der Anordnung der Kompensationselemente als einstellbare Drossel 2a, 2b, 2c und der gestuften Kondensatorbatterie 3a, 3b, 3c zwischen dem Generator 6 und dem Anpassungstransformator 8. Hierdurch wird gerade nicht die Hochspannungsseite des Prüfkreises 11 für die Anordnung der Kompensationselemente in Form der einstellbaren Drossel 2a, 2b, 2c und der gestuften Kondensatorbatterie 3a, 3b, 3c genutzt. Die Bemessungsspannung der Kompensationselemente als einstellbare Drossel 2a, 2b, 2c und der gestuften Kondensatorbatterie 3a, 3b, 3c ist daher identisch mit der Bemessungsspannung des Generators 6, was zu einer Reduzierung der Baugröße und der Bemessungsleistung der gesamten Komponenten des Prüfkreises 11 beiträgt. Hierdurch lassen sich alle Komponenten des Prüfkreises 11 in einer kleineren Bauweise bereitstellten, insbesondere der Generator 6, die einstellbaren Drosseln 2a, 2b, 2c, die gestuften Kondensatorbatterien 3a, 3b, 3c und der Anpassungstransformator 8.

Die Komponenten des Prüfkreises haben in diesem Falle eine solche Größe, dass diese in Standardtransportcontainern eingebaut und bewegt werden können. Beispielsweise kann in einem ersten Container die Spannungsversorgung des Prüfkreises 11 in Form des Hauptleistungsschalters 9, des Frequenz- beziehungsweise Stromrichters 10, des Motors 5 und des Generators 6 angeordnet sein. In einem zweiten Container kann der Anpassungstransformator 8 unmittelbar vor dem zu prüfenden Transformator 1 integriert werden. In einem dritten Container können die Kompensationselemente in Form der einstellbaren Drossel 2a, 2b, 2c und der gestuften Kondensatorbatterie 3a, 3b, 3c angeordnet werden.

Durch die Automatisierung der Kompensation mittels einer speicherbasierten Steuerung wird die Durchführung der Transformatorprüfung mit nur noch einer Bedienperson ermöglicht. Aufgrund der Vorgabe von Sicherheitsgrenzen, insbesondere von nicht zu über- beziehungsweise unterschreitenden Phasenwinkeln, vorzugsweise eines Phasenwinkels von cos(Φ)≈0,6 zwischen der Generatorspannung und dem Generatorstrom beziehungsweise zwischen der Prüfspannung und dem Prüfstrom kann die Prüfung des Prüftransformators 1 innerhalb stabiler Betriebszustände vorgenommen werden.

### Bezugszeichenliste

- 1: Prüftransformator
- 2a,2b,2c: einstellbare Drossel
- 3a,3b,3c: gestufte Kondensatorbatterie
- 4: Messkreis des Prüftransformators
- 5: Motor
- 6: Generator
- 7: Leistungsschalter des Prüfkreises
- 8: Anpassungstransformator
- 9: Leistungsschalter der Vorrichtung
- 10: Wandler
- 11: Prüfkreis
- 12a,12b,12c: Schalter
- 13: Auswerteeinrichtung
- 14a bis 14m: Messwandler

## Patentansprüche

1. Vorrichtung zur Blindleistungskompensation eines Prüftransformators (1) mit einer Drossel (2a,2b,2c) und einem Generator (6), wobei der Generator (6) zur Erzeugung eines Generatorstromes und einer Generatorspannung mit vorgebbarer Prüffrequenz dient,
**dadurch gekennzeichnet, dass**
die Induktivität der Drossel (2a,2b,2c) einstellbar und mit einer gestuften Kondensatorbatterie (3a,3b,3c) verschaltbar ist, wobei die einstellbare Drossel (2a,2b,2c) und die gestufte Kondensatorbatterie (2a,2b,2c) zwischen dem Generator (6) und dem Prüftransformator (1) angeordnet und aufgrund von ermittelten elektrischen Größen eines Prüfkreises (11) mit dem Prüftransformator (1) so schaltbar sind, dass der Generator (6) bei nahezu ausschließlicher Wirkleistung betreibbar ist.

2. Vorrichtung nach Anspruch 1,
**dadurch gekennzeichnet, dass**
ein Phasenwinkel cos(Φ) zwischen der Generatorspannung und dem Generatorstrom ermittelt und hieraus die Einstellgrößen für die gestufte Kondensatorbatterie (3a,3b,3c) und/oder die einstellbare Drossel (2a,2b,2c) ermittelbar und einstellbar sind.

3. Vorrichtung nach Anspruch 2,
**dadurch gekennzeichnet, dass**
eine Steuerung die Einstellgrößen der gestuften Kondensatorbatterie (3a,3b,3c) und/oder der einstellbaren Drossel (2a,2b,2c) in Abhängigkeit des Phasenwinkels cos (Φ) zwischen Generatorspannung/Generatorstrom und/oder zwischen einer Prüfspannung/Prüfstrom unmittelbar vor dem Prüftransformator (1) mit vorgebbarer Prüffrequenz ermittelt und einstellt.

4. Vorrichtung nach einem der Ansprüche 1 bis 3,
**dadurch gekennzeichnet, dass**
ein Motor (5) auf die geforderte Drehzahl als äquivalent zur Prüffrequenz einstellbar ist und mittels eines Leistungsschalters (7) bei anstehender Drehzahl über den Generator (6) mit einem Anpassungstransformator (8) als Teil eines Prüfkreises (11) verbindbar ist.

5. Vorrichtung nach Anspruch 4,
**dadurch gekennzeichnet, dass**
bei geschlossenem Leistungsschalter (7) der Generator (6) zuschaltbar und auf die geforderte Drehzahl als äquivalent zur Prüffrequenz einstellbar ist.

6. Verfahren zur Blindleistungskompensation eines Prüftransformators (1) mit einer Drossel (2a,2b,2c) und einem Generator (6), wobei der Generator (6) zur Erzeugung eines Generatorstromes und einer Generatorspannung mit vorgebbarer Prüffrequenz dient, mit folgenden Schritten:
a) Ermittlung der notwendigen Drehzahl eines Motors (5) als äquivalent der Prüffrequenz;
b) Zuschalten eines Generators (6) an den Motor (6);
c) Ermittelung des Phasenwinkels cos(Φ) zwischen der am Prüftransformator (1) anliegenden Prüfspannung und des Prüfstromes;
d) Einstellung der Induktivität der einstellbaren Drossel (2a,2b,2c) und der Kapazität einer gestuften Kondensatorbatterie (3a,3b,3c) in Abhängigkeit der ermittelten elektrischen Messgrößen des Prüfkreises (11) mit dem Prüftransformator (1), so dass der Generator (6) bei geschlossenem Prüfkreis (11) bei nahezu ausschließlicher Wirkleistung betrieben wird.

7. Verfahren nach Anspruch 6,
**dadurch gekennzeichnet, dass**
eine kapazitive Kompensation des Prüftransformators (1) im Prüfkreis (11) dergestalt erfolgt, dass bis zu einem Grenzwert des Phasenwinkels cos(Φ) zwischen dem Generatorspannung/Generatorstrom und/oder zwischen einer unmittelbar vor dem Prüftransformator (1) ermittelten Prüfspannung/Prüfstrom keine Kapazität zugeschaltet wird und erst mit Erreichen des vorgebbaren Grenzwertes Kondensatorstufen der gestuften Kondensatorbatterie (3a,3b,3c) zuschaltbar und schrittweise bei der Erhöhung der Generatorspannung bis zu einer vorgebbaren Prüfspannung zugeschaltet werden.

8. Verfahren nach Anspruch 6,
**dadurch gekennzeichnet, dass**
eine induktive Kompensation durch Einstellung der einstellbaren Drossel (2a, 2b, 2c) unter Abschaltung der gestuften Kondensatorbatterie (3a, 3b, 3c) vorgenommen wird.

9. Verfahren nach einem der Ansprüche 6 bis 8,
**dadurch gekennzeichnet, dass**
eine speicherprogrammierbare Steuerung die Einstellgrößen der Drossel (2a, 2b, 2c) und/oder der gestuften Kondensatorbatterie (3a, 3b, 3c) aus dem ermittelten Phasenwinkel cos(Φ) der Generatorspannung und des Generatorstromes beziehungsweise aus dem ermittelten Phasenwinkel cos(Φ) der Prüfspannung und des Prüfstromes ermittelt.

10. Verfahren nach einem der Ansprüche 6 bis 9,
**dadurch gekennzeichnet, dass**
mittels im Prüfkreis (11) angeordneter Messwandler (14a bis 14m) der Phasenwinkel cos(Φ) der Generatorspannung und des Generatorstromes beziehungsweise der Phasenwinkel cos(Φ) der Prüfspannung und des Prüfstromes ermittelt wird.

## Claims

1. Apparatus for power factor correction for a test transformer (1) by means of an inductor (2a, 2b, 2c) and a generator (6), wherein the generator (6) is used to produce a generator current and a generator voltage at a predeterminable test frequency,
**characterized in that**
the inductance of the inductor (2a, 2b, 2c) is variable and can be connected to a stepped capacitor bank (3a, 3b, 3c), wherein the variable inductors (2a, 2b, 2c) and the stepped capacitor bank (2a, 2b, 2c) are arranged between the generator (6) and the test transformer (1) and can be connected to the test transformer (1) on the basis of determined electrical variables of a test circuit (11) such that the generator (6) can be operated virtually exclusively with real power.

2. Apparatus according to Claim 1,
**characterized in that**
a phase angle cos (Φ) is determined between the generator voltage and the generator current, and setting variables for the stepped capacitor bank (3a, 3b, 3c) and/or the variable inductors (2a, 2b, 2c) can be determined and set from this.

3. Apparatus according to Claim 2,
**characterized in that**
a control determines and sets the setting variables of the stepped capacitor bank (3a, 3b, 3c) and/or of the variable inductors (2a, 2b, 2c) as a function of the phase angle cos (Φ) between the generator voltage/generator current and/or between a test voltage/test current immediately before the test transformer (1), using a predeterminable test frequency.

4. Apparatus according to one of Claims 1 to 3,
**characterized in that**
a motor (5) can be set to the required rotation speed as an equivalent to the test frequency and can be connected by means of a circuit breaker (7), when a rotation speed is present, via the generator (6) to a matching transformer (8) as part of a test circuit (11).

5. Apparatus according to Claim 4,
**characterized in that**,
when the circuit breaker (7) is closed, the generator (6) can be connected and can be set to the required rotation speed as an equivalent to the test frequency.

6. Method for power factor correction for a test transformer (1) by means of an inductor (2a, 2b, 2c) and a generator (6), wherein the generator (6) is used to produce a generator current and a generator voltage at a predeterminable test frequency, having the following steps:
a) determination of the required rotation speed of a motor (5) as an equivalent to the test frequency;
b) connection of a generator (6) to the motor (5);
c) determination of the phase angle cos (Φ) between the test voltage at the test transformer (1) and the test current;
d) setting of the inductance of the variable inductors (2a, 2b, 2c) and of the capacitance of a stepped capacitor bank (3a, 3b, 3c) as a function of the determined electrical measurement variables of the test circuit (11) by means of the test transformer (1), such that the generator (6) is operated virtually exclusively with real power when the test circuit (11) is closed.

7. Method according to Claim 6,
**characterized in that**
capacitive compensation is provided for the test transformer (1) in the test circuit (11) such that no capacitance is connected up to a limit value of the phase angle cos (Φ) between the generator voltage/generator current and/or between a test voltage/test current which is determined immediately upstream of the test transformer (1), and capacitor steps of the stepped capacitor bank (3a, 3b, 3c) can be connected only when the predeterminable limit value is reached, and are connected step-by-step when the generator voltage increases, up to a predeterminable test voltage.

8. Method according to Claim 6,
**characterized in that**
inductive compensation is carried out by adjustment of the variable inductors (2a, 2b, 2c), with the stepped capacitor bank (3a, 3b, 3c) being disconnected.

9. Method according to one of Claims 6 to 8,
**characterized in that**
a programmable logic controller determines the setting variables for the inductors (2a, 2b, 2c) and/or the stepped capacitor bank (3a, 3b, 3c) from the determined phase angle cos (Φ) of the generator voltage and of the generator current, or from the determined phase angle cos (Φ) between the test voltage and the test current.

10. Method according to one of Claims 6 to 9,
**characterized in that** the phase angle cos (Φ) between the generator voltage and the generator current, or the phase angle cos (Φ) between the test voltage and the test current, is determined by means of instrument transformers (14a to 14m) which are arranged in the test circuit (11).

## Revendications

1. Dispositif de compensation de la puissance réactive d'un transformateur (1) d'essai, comprenant une bobine (2a, 2b, 2c) et un générateur (6), le générateur servant à la production d'un courant de générateur et d'une tension de générateur d'une fréquence d'essai pouvant être prescrite,
**caractérisé en ce que**
l'inductance de la bobine (2a, 2b, 2c) est réglable et peut être connectée avec une batterie (3a, 3b, 3c) de condensateurs étagée, la bobine (2a, 2b, 2c) réglable et la batterie (2a, 2b, 2c) de condensateurs étagée étant montées entre le générateur (6) et le transformateur (1) d'essai et pouvant être, en raison des grandeurs électriques déterminées d'un circuit (11) d'essai, connectées avec le transformateur (1) d'essai, de manière à ce que le générateur (6) puisse fonctionner presque exclusivement à la puissance réactive.

2. Dispositif suivant la revendication 1,
**caractérisé en ce que**
un angle de phase cosinus (Φ) entre la tension du générateur et le courant du générateur est déterminé et les grandeurs de réglage de la batterie (3a, 3b, 3c) de condensateurs étagée et/ou de la bobine (2a, 2b, 2c) réglable peuvent en être déterminées et réglées.

3. Dispositif suivant la revendication 2,
**caractérisé en ce que**
une commande des grandeurs de réglage de la batterie (3a, 3b, 3c) de condensateurs étagée et/ou de la bobine (2a, 2b, 2c) réglable est, en fonction de l'angle de phase cosinus (Φ) entre la tension du générateur/le courant du générateur et/ou entre une tension d'essai/courant d'essai directement devant le transformateur (1) d'essai, déterminée et réglée à une fréquence d'essai pouvant être prescrite.

4. Dispositif suivant l'une des revendications 1 à 3,
**caractérisé en ce que**
un moteur (5) est réglable à la vitesse de rotation exigée comme équivalente à la fréquence d'essai et peut, au moyen d'un disjoncteur (7), à une vitesse de rotation convenable, être relié en tant que partie d'un circuit (11) d'essai à un transformateur (8) d'adaptation par l'intermédiaire du générateur (6).

5. Dispositif suivant la revendication 4,
**caractérisé en ce que**
lorsque le disjoncteur (7) est fermé, le générateur (6) peut être mis en circuit et être réglé à la vitesse de rotation exigée comme équivalente à la fréquence d'essai.

6. Procédé de compensation de la puissance réactive d'un transformateur (1) d'essai comprenant une bobine (2a, 2b, 2c) et un générateur (6), le générateur (6) servant à la production d'un courant de générateur et d'une tension de générateur d'une fréquence d'essai pouvant être prescrite, comprenant les stades suivantes :
a) détermination de la vitesse de rotation nécessaire d'un moteur (5) comme équivalent de la fréquence d'essai;
b) branchement d'un générateur (6) sur le moteur (5);
c) détermination de l'angle de phase cosinus (Φ) entre la tension d'essai s'appliquant au transformateur (1) d'essai et le courant d'essai;
d) réglage, par le transformateur (1) d'essai, de l'inductance de la bobine (2a, 2b, 2c) réglable et de la capacité d'une batterie (3a, 3b, 3c) de condensateurs étagée en fonction des grandeurs électriques de mesure déterminées du circuit (11) d'essai, de manière à ce que le générateur (6) fonctionne, lorsque le circuit (11) d'essai est fermé, presque exclusivement à la puissance réactive.

7. Procédé suivant la revendication 6,
**caractérisé en ce que**
l'on effectue dans le circuit (11) d'essai une compensation capacitive du transformateur (1) d'essai, de manière à ne pas mettre en circuit de capacité, jusqu'à une valeur limite de l'angle de phase cosinus (Φ) entre la tension du générateur/courant du générateur et/ou entre une tension d'essai/courant d'essai déterminée directement avant le transformateur (1) d'essai, et à ne mettre en circuit des étages de condensateur de la batterie (3a, 3b, 3c) de condensateurs étagée que lorsque la valeur limite pouvant être prescrite est atteinte et à les mettre en circuit pas à pas, lorsque la tension du générateur s'élève jusqu'à une tension d'essai pouvant être prescrite.

8. Procédé suivant la revendication 6,
**caractérisé en ce que**
on effectue une compensation inductive par réglage de la bobine (2a, 2b, 2c) réglable en mettant la batterie (3a, 3b, 3c) de condensateurs étagée hors circuit.

9. Procédé suivant l'une des revendications 6 à 8,
**caractérisé en ce que**
l'on détermine une commande programmable par mémoire des grandeurs de réglage de la bobine (2a, 2b, 2c) et/ou de la batterie (3a, 3b, 3c) de condensateurs étagée, à partir de l'angle de phase cosinus (Φ) déterminé de la tension du générateur et du courant du générateur ou à partir de l'angle de phase cosinus (Φ) déterminé de la tension d'essai et du courant d'essai.

10. Procédé suivant l'une des revendications 6 à 9,
**caractérisé en ce que**
au moyen d'un transducteur (14a à 14m) de mesure monté dans le circuit (11) d'essai, on détermine l'angle de phase cosinus (Φ) de la tension du générateur et du courant du générateur ou l'angle de phase cosinus (Φ) de la tension d'essai et du courant d'essai.
